# EUROPÄISCHE PATENTANMELDUNG

(11) **EP 4 470 905 A1**
(43) Veröffentlichungstag der Anmeldung: **04.12.2024**
(21) Anmeldenummer: 24178293.7
(22) Anmeldetag: 27.05.2024
(51) Int. Cl.: B64C 1/00, B64D 13/08, B64D 33/10

(54) **PRIMÄRBAUTEIL FÜR EIN LUFTFAHRZEUG MIT INTEGRIERTEM WÄRMEMANAGEMENT**

(30) Priorität: 30.05.2023 DE 102023114120
(71) Anmelder: Premium AEROTEC GmbH, 86179 Augsburg (DE)
(72) Erfinder: Weidinger, Sebastian, 86179 Augsburg (DE); Marzia, Sascha, 86179 Augsburg (DE); Kaspar, Alfons, 86179 Augsburg (DE); Kaufmann, Sergej, 86179 Augsburg (DE)
(74) Vertreter: LKGLOBAL Lorenz & Kopf Patentanwalt Attorney at Law PartG mbB

(57) **Zusammenfassung**

Ein Primärbauteil (100) für ein Luftfahrzeug (10) weist eine erste Oberfläche (102) und eine der ersten Oberfläche (102) gegenüberliegende zweite Oberfläche (104) sowie einen Wärmetauscher (200) auf. Der Wärmetauscher (200) weist einen Wärmetauscherkörper (201) und mehreren Anschlüssen (212, 214, 222, 224) auf. Der Wärmetauscher (200) definiert einen ersten Fluidkreislauf (210) und einen zweiten Fluidkreislauf (220), wobei jeder Fluidkreislauf mit jeweils zwei Anschlüssen fluidisch verbunden ist und der erste Fluidkreislauf (210) von dem zweiten Fluidkreislauf (220) fluidisch getrennt ist. Der Wärmetauscherkörper (201) ist in dem Primärbauteil (100) dergestalt eingebettet, dass der Wärmetauscherkörper (201) zwischen der ersten Oberfläche (102) und der zweiten Oberfläche (104) des Primärbauteils (100) angeordnet ist und jeder der mehreren Anschlüsse (212, 214, 222, 224) entweder über die erste Oberfläche (102) oder über die zweite Oberfläche (104) fluidisch zugänglich ist.

## Beschreibung

### Technisches Gebiet

Die vorliegende Beschreibung betrifft ein Primärbauteil für ein Luftfahrzeug mit einem integrierten Wärmetauscher sowie ein Luftfahrzeug mit einem solchen Primärbauteil.

### Technischer Hintergrund

Technische Geräte zeichnen sich häufig dadurch aus, dass beim Betreiben dieser technischen Geräte Wärme anfällt, welche durch ein Wärmemanagement abgeführt werden muss, um Schäden an dem technischen Gerät zu vermeiden bzw. die Temperatur des technischen Geräts in einem zugelassenen Temperaturbereich zu halten.

Für das Wärmemanagement werden üblicherweise Wärmetauscher verwendet, um Wärme an dem einen Ort aufzunehmen und an einem anderen Ort abzugeben. Solche Wärmetauscher und andere Mechanismen des Wärmemanagements erfordern in einem technischen Gerät ihren eigenen Bauraum und nehmen damit Installationsvolumen in Anspruch, welches damit nicht für andere Komponenten zur Verfügung steht.

Gerade in solchen Systemen, in welchen Bauraum eine begrenzte Ressource ist und auch das Gewicht des Gesamtsystems einen relevanten Parameter darstellt, kann die Installation der Komponenten für das Wärmemanagement eine Herausforderung darstellen.

Es kann daher als Aufgabe betrachtet werden, eine verbesserte Lösung für das Wärmemanagement in technischen Systemen bereitzustellen. Insbesondere kann es als Aufgabe betrachtet werden, eine platzsparende und gewichtssparende Lösung für das Wärmemanagement bereitzustellen.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist ein Primärbauteil für ein Luftfahrzeug angegeben. Das Primärbauteil weist eine erste Oberfläche, eine der ersten Oberfläche gegenüberliegende zweite Oberfläche, und einen Wärmetauscher mit einem Wärmetauscherkörper und mehreren Anschlüssen auf. Der Wärmetauscher definiert einen ersten Fluidkreislauf und einen zweiten Fluidkreislauf, wobei sowohl der erste Fluidkreislauf als auch der zweite Fluidkreislauf jeweils mindestens zwei Anschlüsse aufweist und mit diesen Anschlüssen fluidisch verbunden ist. Der erste Fluidkreislauf ist von dem zweiten Fluidkreislauf fluidisch getrennt. Der Wärmetauscherkörper ist in dem Primärbauteil dergestalt eingebettet, dass der Wärmetauscherkörper zwischen der ersten Oberfläche und der zweiten Oberfläche des Primärbauteils angeordnet ist und jeder der mehreren Anschlüsse entweder über die erste Oberfläche oder über die zweite Oberfläche fluidisch zugänglich ist.

Bei dem Primärbauteil handelt es sich beispielsweise um einen Teil einer lasttragenden Komponente oder eines Strukturbauteils eines Luftfahrzeugs, beispielsweise des Rumpfes, der Tragfläche, einer Steuerfläche oder eines Triebwerksgehäuses. Der hier beschriebene Aufbau hat den Vorteil, dass der Wärmetauscherkörper platzsparend in dem Primärbauteil integriert bzw. eingebettet werden kann, ohne zusätzlichen Bauraum innerhalb des von der Primärstruktur gebildeten Installationsvolumens erfordert.

Üblicherweise ist ein Wärmetauscher eine gesonderte Komponente, welche für das Wärmemanagement in einem technischen Gerät zusätzlich angebracht werden muss. Somit erfordert ein solcher zusätzlicher Wärmetauscher auch Bauraum bzw. Installationsvolumen. Dem hier beschriebenen Primärbauteil liegt der Gedanke zu Grunde, dass der Wärmetauscherkörper in das Primärbauteil integriert wird.

Ein Wärmetauscher zeichnet sich grundsätzlich dadurch aus, dass er über mindestens zwei voneinander getrennte Fluidkreisläufe verfügt und thermische Energie aus einem ersten Fluidkreislauf in einen zweiten Fluidkreislauf übertragen wird. Ein Fluid (beispielsweise eine Kühlflüssigkeit oder ein anderes Fluid) in dem ersten Fluidkreislauf fließt mit einer hohen Temperatur in den Wärmetauscherkörper ein und thermische Energie wird über eine Trennwand (welche bevorzugt eine hohe thermische Leitfähigkeit hat) zwischen den beiden Kreisläufen an ein Fluid in dem zweiten Fluidkreislauf übertragen. Das Fluid in dem zweiten Fluidkreislauf nimmt die thermische Energie auf und transportiert sie ab.

Jeder der Anschlüsse ragt entweder über eine Oberfläche des Primärbauteils heraus und ist damit zugänglich für eine fluidische Kopplung oder ein externer Anschluss kann in eine entsprechende Ausnehmung in der jeweiligen Oberfläche des Primärbauteils eingebracht werden und mit einem Anschluss des Wärmetauschers fluidisch gekoppelt werden.

In einer Ausführungsform weist der Wärmetauscherkörper eine erste Oberfläche und eine der ersten Oberfläche gegenüberliegende zweite Oberfläche auf, wobei die erste Oberfläche des Wärmetauscherkörpers und die zweite Oberfläche des Wärmetauscherkörpers jeweils mindestens teilweise an Material des Primärbauteils angrenzt.

Das bedeutet, dass der Wärmetauscherkörper innerhalb eines Materials des Primärbauteils integriert bzw. darin eingebettet ist.

Die an dem Wärmetauscherkörper befindlichen Anschlüsse des ersten Fluidkreislaufs und des zweiten Fluidkreislaufs erstrecken sich durch das Material des Primärbauteils und sind somit über die Oberflächen des Primärbauteils für eine fluidische Kopplung zugänglich.

Das Material des Primärbauteils bedeckt die Oberflächen des Wärmetauscherkörpers bzw. liegt an den Oberflächen des Wärmetauscherkörpers an. Bevorzugt ist der Wärmetauscherkörper vollständig in das Primärbauteil eingebettet und von dem Material des Primärbauteils umgeben, abgesehen von den Zugängen zu den Anschlüssen für den ersten und zweiten Fluidkreislauf.

In einer weiteren Ausführungsform ist das Material des Primärbauteils mit der ersten Oberfläche des Wärmetauscherkörpers und/oder mit der zweiten Oberfläche des Wärmetauscherkörpers verklebt.

Damit kann der Wärmetauscherkörper zusätzlich zur Festigkeit des Primärbauteils beitragen, weil der in das Primärbauteil integrierte Wärmetauscherkörper Lasten aufnehmen kann, welche auf das Primärbauteil wirken.

In einer weiteren Ausführungsform weist das Primärbauteil mehrere Materialschichten auf und der Wärmetauscherkörper ist zwischen mindestens zwei dieser Materialschichten angeordnet.

Mindestens eine Materialschicht des Primärbauteils erstreckt sich entlang der ersten Oberfläche des Wärmetauscherkörpers und mindestens eine andere Materialschicht des Primärbauteils erstreckt sich entlang der zweiten Oberfläche des Wärmetauscherkörpers.

Die Materialschichten haften an der ersten Oberfläche bzw. der zweiten Oberfläche des Wärmetauscherkörpers. Beidseitig des Wärmetauscherkörpers, also sowohl entlang der ersten Oberfläche als auch der zweiten Oberfläche des Wärmetauscherkörpers, können aber auch mehr als jeweils eine Materialschicht des Primärbauteils angeordnet sein.

In einer weiteren Ausführungsform besteht das Primärbauteil aus einem Faserverbundwerkstoff.

Das Primärbauteil besteht beispielsweise aus mehreren Schichten Fasern bzw. eines Fasergeleges, welche in einen Matrixwerkstoff eingebettet sind. Der Matrixwerkstoff füllt den Raum zwischen den Fasern. Ein solcher Verbundwerkstoff bietet eine hohe Festigkeit bei gleichzeitig niedrigem Gewicht und andere Materialeigenschaften, welche im Flugzeugbau als vorteilhaft anerkannt sind.

Der Wärmetauscherkörper ist vorteilhaft zwischen solchen Faserschichten angeordnet. Dadurch trägt die dem Wärmetauscherkörper innewohnende Festigkeit auch zu der Festigkeit des Primärbauteils bei.

In einer weiteren Ausführungsform enthält der Faserverbundwerkstoff Glasfasern und/oder Kohlenstofffasern.

In einer weiteren Ausführungsform ist der Wärmetauscherkörper in dem Primärbauteil dergestalt eingebettet, dass ein erster sich durch das Primärbauteil ausbreitender Lastpfad sich entlang der ersten Oberfläche des Wärmetauscherkörpers erstreckt, und ein zweiter sich durch das Primärbauteil ausbreitender Lastpfad sich entlang der zweiten Oberfläche des Wärmetauscherkörpers erstreckt.

Der Wärmetauscherkörper ist also innerhalb des Primärbauteils integriert. Beispielsweise ist der Wärmetauscherkörper von allen Oberflächen des Primärbauteils beabstandet, so dass das Primärbauteil entlang aller Oberflächen des Wärmetauschers eine durchgängige Materialschicht bildet, welche als Lastpfad dient. Die das Primärbauteil bildende Materialschicht weist lediglich einige Ausnehmungen auf, um die Anschlüsse des Wärmetauschers für den ersten Fluidkreislauf und den zweiten Fluidkreislauf zugänglich zu machen.

Sowohl der erste Lastpfad als auch der zweite Lastpfad werden jeweils von dem Material des Primärbauteils in Verbindung mit dem Wärmetauscherkörper aufgenommen und übertragen.

In einer weiteren Ausführungsform erstreckt sich der erste Lastpfad zwischen der ersten Oberfläche des Wärmetauscherkörpers und der ersten Oberfläche des Primärbauteils und der zweite Lastpfad erstreckt sich zwischen der zweiten Oberfläche des Wärmetauscherkörpers und der zweiten Oberfläche des Primärbauteils.

In dieser Variante ist das Primärbauteil gemäß den Prinzipien eines Sandwichbauteils aufgebaut. Das Material bzw. die Schichten des Primärbauteils umgeben den Wärmetauscherkörper und der Wärmetauscherkörper stellt den Kern eines Sandwiches dar.

Das Material des Primärbauteils bzw. die Schichten des Primärbauteils sind mit dem Wärmetauscherkörper verklebt oder anderweitig damit verbunden.

In einer weiteren Ausführungsform weist der Wärmetauscherkörper einen abgeschrägten Randbereich auf.

In dem abgeschrägten Randbereich laufen die erste Oberfläche des Wärmetauscherkörpers und die zweite Oberfläche des Wärmetauscherkörpers aufeinander zu. Dieser Aufbau hat den Vorteil, dass das Material des Primärbauteils nicht gestuft verläuft, wo der Wärmetauscherkörper in das Primärbauteil integriert ist. Vielmehr verläuft das Material des Primärbauteils oder die Materialschichten, welche den Wärmetauscherkörper umschließen, an dem abgeschrägten Randbereich unter dem durch den Randbereich vorgegebenen Winkel aufeinander zu.

Der abgeschrägten Randbereich kann umlaufend um den gesamten Wärmetauscherkörper vorgesehen sein. Im Querschnitt weist der Wärmetauscherkörper beispielsweise eine Trapezform auf. Als dreidimensionaler Körper kann der Wärmetauscher auch als Pyramidenstumpf beschrieben werden, wobei eine Oberfläche des Wärmetauscherkörpers kleiner ist als die andere Oberfläche des Wärmetauscherkörpers, und die kleinere Oberfläche mit schräg verlaufenden Flächen mit der anderen Oberfläche verbunden ist bzw. in diese übergeht.

In einer weiteren Ausführungsform weist der Wärmetauscherkörper ein Metall, Kunststoff oder Keramik auf oder besteht hieraus.

Der Wärmetauscherkörper kann beispielsweise durch additive Herstellungsverfahren (sog. 3D-Druck oder ähnliche additive Verfahren) hergestellt werden, wodurch der Wärmetauscherkörper in nahezu beliebigen Geometrien hergestellt werden kann, um die Integration in ein gewünschtes Primärbauteil eines Luftfahrzeugs zu ermöglichen.

In einer weiteren Ausführungsform ist mindestens eine Oberfläche des Wärmetauscherkörpers mit einer Oberfläche des Primärbauteils thermisch gekoppelt.

Dies ermöglicht es, dass Wärme von dem Wärmetauscherkörper über das Material des Primärbauteils an die Umgebung abgegeben werden kann. Dies kann neben der Übertragung von thermischer Energie von einem Fluidkreislauf auf den anderen Fluidkreislauf eine weitere Kühlleistung bereitstellen.

Gemäß einem weiteren Aspekt ist ein Luftfahrzeug mit einem Primärbauteil wie hierin beschrieben angegeben.

In einer Ausführungsform ist das Primärbauteil ein Strukturbauteil an einem Rumpf, einer Tragfläche, einer Steuerfläche oder einem Triebwerk.

Insbesondere ist das Primärbauteil ein Bestandteil des Rumpfes, der Tragfläche, der Steuerfläche oder des Triebwerks und bildet mindestens einen Teil hiervon.

Dieser Aufbau ermöglicht eine Nutzung der Struktur des Luftfahrzeugs für das Wärmemanagement in dem Luftfahrzeug. Es ist kein zusätzlicher Bauraum für den Wärmetauscher erforderlich, weil der Wärmetauscherkörper in die tragende Struktur des Luftfahrzeugs integriert ist. Mit dem oben beschriebenen Aufbau des Primärbauteils trägt der Wärmetauscherkörper zu der mechanischen Festigkeit des Primärbauteils bei, weil der Wärmetauscherkörper in das Primärbauteil integriert bzw. eingebettet ist.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Wärmetauschers;
- Fig. 2: eine schematische Darstellung eines Wärmetauschers;
- Fig. 3: eine schematische Darstellung eines Primärbauteils mit darin integriertem Wärmetauscherkörper;
- Fig. 4: eine schematische Darstellung eines Primärbauteils mit darin integriertem Wärmetauscherkörper;
- Fig. 5: eine schematische Darstellung eines Primärbauteils mit darin integriertem Wärmetauscherkörper in einer Querschnittdarstellung;
- Fig. 6: eine schematische Darstellung eines Primärbauteils mit darin integriertem Wärmetauscherkörper;
- Fig. 7: eine schematische Darstellung eines Luftfahrzeugs.

### Detaillierte Beschreibung

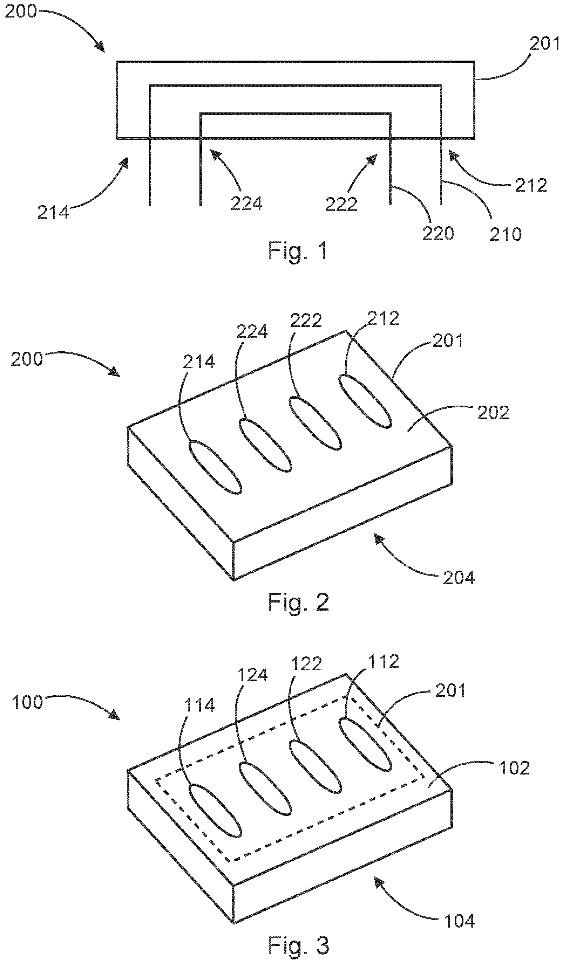

Fig. 1 zeigt einen Wärmetauscher 200 mit einem Wärmetauscherkörper 201. An dem Wärmetauscherkörper 201 sind vier Anschlüsse angeordnet, welche einen ersten Fluidkreislauf 210 und einen zweiten Fluidkreislauf 220 bilden. Der erste Fluidkreislauf 210 weist einen ersten Anschluss 212 und einen zweiten Anschluss 214 auf. Der zweite Fluidkreislauf 220 weist einen ersten Anschluss 222 und einen zweiten Anschluss 224 auf.

Der erste Fluidkreislauf 210 unter zweite Fluidkreislauf 220 sind voneinander fluidisch getrennte Volumina, d.h., dass es keinen Austausch von Fluid zwischen dem ersten Fluidkreislauf 210 und dem zweiten Fluidkreislauf 220 gibt. Allerdings sind der erste Fluidkreislauf 210 und der zweite Fluidkreislauf 220 durch eine Trennwand getrennt, welche es ermöglicht, thermische Energie zwischen dem ersten Fluidkreislauf 210 und dem zweiten Fluidkreislauf 220 zu übertragen.

Beispielsweise strömt ein erhitztes Fluid durch den ersten Fluidkreislauf und ein vergleichsweise kälteres Fluid durch den zweiten Fluidkreislauf. Somit wird thermische Energie von dem ersten Fluidkreislauf auf den zweiten Fluidkreislauf übertragen. Die Fluide in den beiden Fluidkreisläufen können gleichläufig oder gegenläufig mit gleicher oder unterschiedlicher Strömungsgeschwindigkeit strömen.

Fig. 2 zeigt eine isometrische Darstellung des Wärmetauschers 200 aus Fig. 1. Der Wärmetauscherkörper 201 weist eine erste Oberfläche 202 und eine zweite Oberfläche 204 auf. Die erste Oberfläche 202 und die zweite Oberfläche 204 liegen einander gegenüber. An der ersten Oberfläche sind vier Anschlüsse angeordnet, nämlich von dem ersten Fluidkreislauf 210 der erste Anschluss 212 und der zweite Anschluss 214 sowie von dem zweiten Fluidkreislauf 220 der erste Anschluss 222 unter zweite Anschluss 224.

In dem Beispiel der Fig. 2 ist der Wärmetauscherkörper 201 als Quader gezeigt, wobei diese Darstellung als schematisch und nicht einschränkend zu verstehen ist. Vielmehr kann der Wärmetauscherkörper 201 im Kontext der vorliegenden Beschreibung jede beliebige geometrische Form annehmen.

Fig. 3 zeigt eine Primärstruktur 100 mit einem darin integrierten Wärmetauscherkörper 201. Die Primärstruktur 100 weist eine erste Oberfläche 102 und eine zweite Oberfläche 104 auf, wobei die zweite Oberfläche 104 der ersten Oberfläche 102 gegenüberliegt. Der Wärmetauscherkörper 201 ist in das Material der Primärstruktur 100 integriert und ist daher in der Darstellung mit einer gestrichelten Linie gezeigt. Um jedoch in den Wärmetauscherkörper 201 Fluid einbringen zu können, sind die Anschlüsse 212, 214, 222, 224 (siehe Fig. 1 und 2) durch entsprechende Ausnehmungen 112, 114, 122, 124 in der ersten Oberfläche 102 der Primärstruktur 100 zugänglich.

Die Ausnehmungen 112, 114, 122, 124 und auch die Anschlüsse 212, 214, 222, 224 können an derselben Oberfläche 102, 104 des Primärbauteils 100 angeordnet sein. Für die Darstellung der Fig. 3 und auch alle anderen Varianten der Primärstruktur 100 ist aber auch denkbar, dass einige Anschlüsse 212, 214, 222, 224 sowie zugehörige Ausnehmungen 112, 114, 122, 124 an der ersten Oberfläche 102 angeordnet sind und andere Anschlüsse 212, 214, 222, 224 sowie zugehörige Ausnehmungen 112, 114, 122, 124 an der zweiten Oberfläche 104 angeordnet sind.

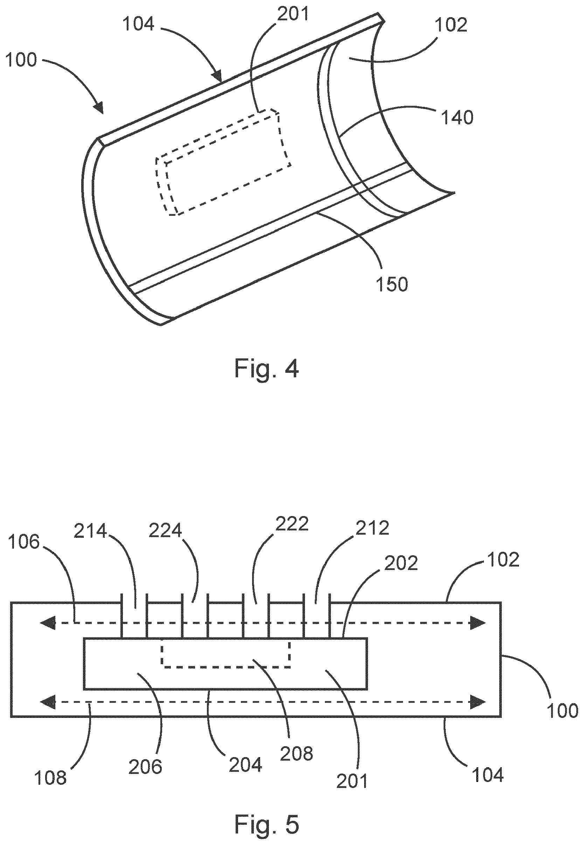

Fig. 4 zeigt eine schematische Darstellung eines Primärbauteils 100, welche als Bestandteil eines Rumpfes eines Flugzeugs ausgestaltet ist. Der Wärmetauscherkörper 201 ist hier auch mit gestrichelten Linien gezeigt und ist in das Bauteil des Rumpfes integriert. An dem Primärbauteil 100 ist beispielhaft ein Spant 140 sowie ein Stringer 150 gezeigt, wobei der Spant 140 sich in Umfangsrichtung des Rumpfes erstreckt und der Stringer 150 sich in Längsrichtung des Rumpfes erstreckt und dem Rumpf Stabilität verleiht.

Fig. 5 zeigt in einem Querschnitt die Integration des Wärmetauscherkörpers 201 in das Primärbauteil 100. Der Wärmetauscherkörper 201 ist vollständig von Material des Primärbauteils 100 umgeben, abgesehen von den Anschlüssen 212, 214, 222, 224, welche durch die erste Oberfläche 102 des Primärbauteils 100 herausgeführt werden. In dem Wärmetauscherkörper 201 ist ein erstes Volumen 206 des ersten Fluidkreislaufs zwischen dem Anschluss 212 und dem Anschluss 214 von einem zweiten Volumen 208 des zweiten Fluidkreislaufs zwischen dem Anschluss 222 und im Anschluss 224 getrennt, dargestellt durch die gestrichelte Linie in dem Wärmetauscherkörper 201.

Die Anschlüsse 212, 214, 222, 224 können einstückig mit dem Wärmetauscherkörper 201 ausgestaltet sein. Beispielsweise wird der Wärmetauscherkörper 201 in einem additiven Herstellungsverfahren mitsamt der Anschlüsse 212, 214, 222, 224 hergestellt.

Die Materiallagen des Primärbauteils 100 können um die Anschlüsse 212, 214, 222, 224 gelegt und die anschließenden Fertigungsschritte für das Primärbauteil ausgeführt werden.

Die erste Oberfläche 202 des Wärmetauscherkörpers 201 ist von der ersten Oberfläche 102 des Primärbauteils 100 beabstandet und ist mit Material des Primärbauteils 100 bedeckt. Ebenso ist die zweite Oberfläche 204 des Wärmetauscherkörpers 201 von der zweiten Oberfläche 104 des Primärbauteils 100 beabstandet und mit Material des Primärbauteils 100 bedeckt. Der Wärmetauscherkörper ist vollständig in das Material des Primärbauteils integriert, so dass Lastpfade 106, 108 sich unter anderem durch das Material des Primärbauteils 100 einerseits zwischen der Oberfläche 102 und der Oberfläche 202 sowie andererseits zwischen der Oberfläche 104 und der Oberfläche 204 erstrecken.

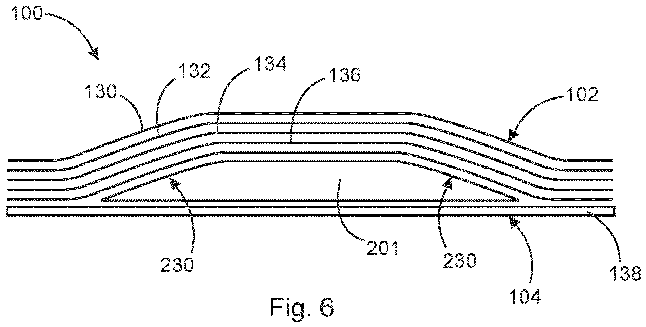

Fig. 6 zeigt ähnlich der Darstellung in Fig. 5 ein Primärbauteil 100, in welchem ein Wärmetauscherkörper 201 integriert ist. Das Primärbauteil 100 ist als Faserverbundbauteil mit mehreren Schichten 130, 132, 134, 136, 138 ausgestaltet, wobei der Wärmetauscherkörper 201 einerseits von der Schicht 138 und andererseits von den anderen Schichten 130 bis 136 sowie weiteren Schichten umgeben ist.

Die Schichten 130, 132, 134, 136, 138 können beispielsweise mit Fasern verstärkte Kunststoffschichten sein und Glasfasern und/oder Kohlenstofffasern aufweisen. Der Wärmetauscherkörper 201 kann in einem Herstellungsvorgang in das Primärbauteil 100 eingebracht werden, so dass die an den Wärmetauscherkörper 201 angrenzenden Schichten mit den Oberflächen des Wärmetauscherkörpers 201 verkleben. Hierdurch wird eine hohe Festigkeit des Primärbauteils 100 erreicht, weil der hier beschriebene Aufbau einer Sandwichstruktur entspricht, in welcher der Wärmetauscherkörper 201 die Funktion der Kernschicht und die umgebenden Materialschichten 130, 132, 134, 136, 138 die Funktion der Deckschichten haben.

Der Wärmetauscherkörper 201 hat abgeschrägte Randbereiche 230. Die Schichten 130, 132, 134, 136, 138 verlaufen entlang der abgeschrägten Randbereiche 230 in Richtung der Schicht 138. Die abgeschrägten Randbereiche 230 können auch als sich verjüngender Bereich beschrieben werden.

Der Aufbau und die Funktion des Primärbauteils 100 können mit Bezug auf ein konkretes Anwendungsbeispiel wie folgt beschrieben werden:

Das hier beschriebene Primärbauteil 100 erlaubt die Integration der Funktion und des dazu nötigen Systems zum Wärmemanagement in die Primärstruktur eines Luftfahrzeugs, z.B. in die Außenhaut oder Klappen oder Türen oder Deckel eines Flugzeugs oder eines Flugzeugsubsystems (Pylon, etc.) und damit verbesserte Nutzung von vorhandenem Bauraum, weil der Wärmetauscher nicht als gesondertes Bauteil in dem verfügbaren Bauraum innerhalb des von der Primärstruktur gebildeten Innenvolumens angeordnet werden muss. Die Primärstruktur übernimmt neben der festigkeitsgebenden Funktion weitere Funktionen als Wärmetauscher beliebiger Größe und Form.

Bei einem Wärmetauscher, der als gesondertes Bauteil ausgestaltet ist, muss gerade dieses gesonderte Bauteil in dem Innenvolumen des Luftfahrzeugs installiert werden, das die Notwendigkeit von Bauraum/Installationsvolumen, Haltern, Montagemitteln, etc. zur Integration mit sich bringt. Im Gegensatz dazu ist hier vorgesehen, dass der Wärmetauscherkörper in das Material der Primärstruktur integriert oder eingebettet ist.

Der Wärmetauscher kann mittels verschiedener Verfahren, beispielsweise mittels additiver Herstellungsverfahren, in Schweiß- Bauweise, mit Lötverfahren oder mit Klebeverfahren, als Kern in eine Strukturkomponente eingebracht werden. Der Wärmetauscherkörper wird dann mit faserverstärkten Lagen belegt, wie in Fig. 6 gezeigt. Mit Hilfe von additiven Herstellungsverfahren können beliebige Geometrien des Wärmetauscherkörpers realisiert werden, was auch für den Anschlussbereich zwischen Wärmetauschervolumen und Zuleitung an den Anschlüssen 212, 214, 222, 224 gilt.

Mit dem hier beschriebenen Aufbau kann die Umgebungsluft, welche an einer Oberfläche des Primärbauteils 100 entlangströmt, als zusätzliche Wärmesenke ohne zusätzliche RAM-Air Kanäle genutzt werden. Durch den Verzicht auf die Installation eines gesonderten Wärmetauschers in dem Installationsvolumen gibt es einen geringeren Platzbedarf durch Funktionsintegration und Reduzierung von Haltern und Verbindungsstellen.

Die Primärstruktur übernimmt neben der festigkeitsgebenden Funktion weitere Aufgaben und wird so zu einem multifunktionalen Element. Funktionen des Wärmemanagements (Wärmetauscher oder Rohrleitungen) werden in die Primärstruktur integriert. Bestehende Einschränkungen in den Abmessungen der Wärmetauscher können durch die Integration umgangen werden. Die Zugänglichkeit zu dem Wärmetauscherkörper für die Anschlüsse der Fluidkreisläufe ist einseitig oder auch mehrseitig möglich. Die Primärstruktur kann aus Metall bestehen oder aus einem Faser-Kunststoff-Verbund. Der Wärmetauscherkörper kann aus Metall, Kunststoff oder Keramik bestehen oder ein solches Material aufweisen.

Bei Verwendung von additiven Fertigungsverfahren können die Anschlüsse an beliebiger Stelle auf dem Wärmetauscherkörper positioniert werden. Der Einsatz von additiven Fertigungsverfahren ermöglicht definierte Ein- und Auslässe für jeweils nur ein Fluid an jeder beliebigen Stelle des Wärmetauscherkörpers. Das Funktionsvolumen innerhalb des Wärmetauscherkörpers kann beliebig ausgestaltet sein (z.B. als Gyroid oder auch als Platten- oder Lamellenwärmetauscher). Je nach Anwendungsfall und verwendetem Fertigungsverfahren kann der funktionale Sandwichkern, also der Wärmetauscherkörper, entweder in Metall (z.B. Ti oder Al) oder auch in Kunststoff ausgeführt sein.

Die Wärmetauscherkörper können in beliebiger Geometrie gefertigt werden, nicht nur in Quaderformen. Der Wärmetauscherkörper kann einfach oder mehrfach gekrümmt sein, um eine Integration in gekrümmte Primärstrukturkomponenten zu ermöglichen.

Beispielsweise kann der Wärmetauscherkörper in der Außenhaut oder dem Rahmen des Rumpfes integriert sein. Rohrleitungen, welche den Zufluss und Abfluss von Fluid zu dem ersten Fluidkreislauf und dem zweiten Fluidkreislauf bereitstellen, können in der Außenhaut, dem Rahmen oder Stringern und Spanten eines Luftfahrzeugs integriert sein. Der Wärmetauscherkörper kann in beliebiger funktionaler Konfiguration ausgestaltet sein: Gleichstrom-Wärmetauscher, Gegenstrom-Wärmetauscher, Kreuzstrom-Wärmetauscher, mit einseitiger oder mehrseitiger Zuführung.

Das hier beschriebene Primärbauteil kann insbesondere in solchen Flugzeugen Anwendung finden, bei denen eine hohe Wärmelast anfällt und entsprechend zu verteilen bzw. abzuführen ist. Dies ist beispielsweise der Fall bei der Verwendung von Antrieben, die auf flüssigem Wasserstoff basieren. Dabei können verschiedene Konzepte zur Anwendung kommen, u.a. das direkte Verbrennen von gasförmigem Wasserstoff im Triebwerk und die Erzeugung elektrischer Energie mittels einer Brennstoffzelle. Aufgrund der geringen volumetrischen Energiedichte von Wasserstoff wird dieser in beiden Anwendungsfällen in kryogenem Zustand in Tanks gespeichert, definiert verdampft und schließlich in gasförmigem Zustand zur Energieerzeugung verwendet. Bei der Verwendung einer Brennstoffzelle zur Energieerzeugung wird eine signifikante Menge Wärme erzeugt, die aus der Brennstoffzelle entfernt werden muss. Im Idealfall wird diese Wärme eine möglichst kurze Strecke transportiert, um parasitäre Wärmeeinträge in die Struktur zu minimieren und auch das Gewicht der Rohrleitungen so gering wie möglich zu halten.

Mit dem hier beschriebenen Primärbauteil ist es möglich, eine Vielzahl von Wärmetauschern an nahezu beliebigen Stellen in einem Luftfahrzeug zu integrieren, ohne hierfür gesonderten Bauraum zu benötigen. Somit können Wärmetauscher bedarfsorientiert in einem Luftfahrzeug platziert werden. Damit kann Wärme nahe an der Wärmequelle abgegeben werden. Auch kann die Wärme durch die Integration in einem Primärbauteil direkt an die Umgebung abgegeben werden, was die Kühlleistung erhöhen kann.

Bei militärischen Flugzeugen kann es erhöhte Anforderungen an die Aufklärbarkeit mit elektromagnetischen Wellen (Radar) geben. Diese Anforderungen können bewirken, dass die Anzahl und Größe von Lufteinlässen und Luftauslässen optimiert werden müssen, was direkt die Architektur des Wärmemanagementsystems beeinflusst. Ebenso kann die Menge der abzuführenden Wärme durch eine steigende Anzahl von elektronischen Komponenten, z.B. Kommunikationswege, leistungsstärkeres Radar und Avionik, erhöht werden. Eine Integration des Wärmetauschers in ein Primärbauteil verbessert die Raumausnutzung und erhöht die Menge der abführbaren thermischen Energie, was damit insgesamt zu einer höheren Leistungsfähigkeit des Gesamtsystems beitragen kann.

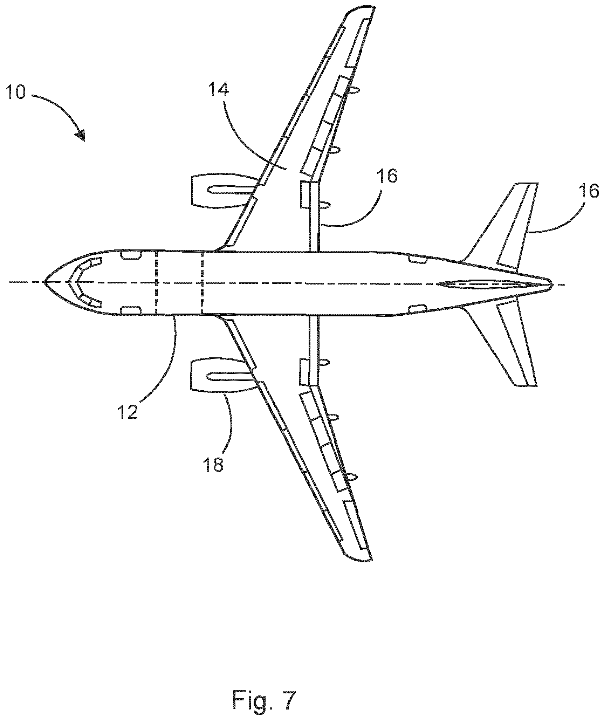

Fig. 7 zeigt eine schematische Darstellung eines Luftfahrzeugs 10. Das Primärbauteil 100 wie oben beschrieben kann in dem Rumpf 12, einer Tragfläche 14, einer Steuerfläche 16 oder dem Triebwerk 18 angeordnet sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Luftfahrzeug
- 12: Rumpf
- 14: Tragfläche
- 16: Steuerflächen
- 18: Triebwerk

- 100: Primärbauteil
- 102: erste Oberfläche
- 104: zweite Oberfläche
- 106: erster Lastpfad
- 108: zweiter Lastpfad
- 112: Ausnehmung
- 114: Ausnehmung
- 122: Ausnehmung
- 124: Ausnehmung
- 130: Schicht
- 132: Schicht
- 134: Schicht
- 136: Schicht
- 138: Schicht

- 140: Spant
- 150: Stringer

- 200: Wärmetauscher
- 201: Wärmetauscherkörper
- 202: erste Oberfläche
- 204: zweite Oberfläche
- 206: erstes Volumen
- 208: zweites Volumen
- 210: erster Fluidkreislauf
- 212: erster Anschluss
- 214: zweiter Anschluss
- 220: zweiter Fluidkreislauf
- 222: erster Anschluss
- 224: zweiter Anschluss
- 230: abgeschrägter Randbereich

## Patentansprüche

1. Primärbauteil (100) für ein Luftfahrzeug (10), das Primärbauteil (100) aufweisend:
eine erste Oberfläche (102);
eine der ersten Oberfläche (102) gegenüberliegende zweite Oberfläche (104);
einen Wärmetauscher (200) mit einem Wärmetauscherkörper (201) und mehreren Anschlüssen (212, 214, 222, 224);
wobei der Wärmetauscher (200) einen ersten Fluidkreislauf (210) und einen zweiten Fluidkreislauf (220) definiert, wobei jeder Fluidkreislauf mit jeweils zwei Anschlüssen fluidisch verbunden ist und der erste Fluidkreislauf (210) von dem zweiten Fluidkreislauf (220) fluidisch getrennt ist;
wobei der Wärmetauscherkörper (201) in dem Primärbauteil (100) dergestalt eingebettet ist, dass der Wärmetauscherkörper (201) zwischen der ersten Oberfläche (102) und der zweiten Oberfläche (104) des Primärbauteils (100) angeordnet ist und jeder der mehreren Anschlüsse (212, 214, 222, 224) entweder über die erste Oberfläche (102) oder über die zweite Oberfläche (104) fluidisch zugänglich ist.

2. Primärbauteil (100) nach Anspruch 1,
wobei der Wärmetauscherkörper (201) eine erste Oberfläche (202) und eine der ersten Oberfläche (202) gegenüberliegende zweite Oberfläche (204) aufweist;
wobei die erste Oberfläche (202) des Wärmetauscherkörpers (201) und die zweite Oberfläche (204) des Wärmetauscherkörpers (201) jeweils mindestens teilweise an Material des Primärbauteils (100) angrenzt.

3. Primärbauteil (100) nach Anspruch 2,
wobei das Material des Primärbauteils (100) mit der ersten Oberfläche (202) des Wärmetauscherkörpers (201) und/oder mit der zweiten Oberfläche (204) des Wärmetauscherkörpers (201) verklebt ist.

4. Primärbauteil (100) nach einem der voranstehenden Ansprüche,
wobei das Primärbauteil (100) mehrere Materialschichten (130, 132, 134, 136, 138) aufweist und der Wärmetauscherkörper (201) zwischen mindestens zwei dieser Materialschichten angeordnet ist.

5. Primärbauteil (100) nach Anspruch 4,
wobei das Primärbauteil (100) aus einem Faserverbundwerkstoff besteht.

6. Primärbauteil (100) nach Anspruch 5,
wobei der Faserverbundwerkstoff Glasfasern und/oder Kohlenstofffasern enthält.

7. Primärbauteil (100) nach einem der voranstehenden Ansprüche,
wobei der Wärmetauscherkörper (201) in dem Primärbauteil (100) dergestalt eingebettet ist, dass ein erster sich durch das Primärbauteil (100) ausbreitender Lastpfad (106) sich entlang der ersten Oberfläche (202) des Wärmetauscherkörpers (201) erstreckt, und ein zweiter sich durch das Primärbauteil (100) ausbreitender Lastpfad (108) sich entlang der zweiten Oberfläche (204) des Wärmetauscherkörpers (201) erstreckt.

8. Primärbauteil (100) nach Anspruch 7,
wobei der erste Lastpfad (106) sich zwischen der ersten Oberfläche (202) des Wärmetauscherkörpers (201) und der ersten Oberfläche (102) des Primärbauteils (100) erstreckt;
wobei der zweite Lastpfad (108) sich zwischen der zweiten Oberfläche (204) des Wärmetauscherkörpers (201) und der zweiten Oberfläche (104) des Primärbauteils (100) erstreckt.

9. Primärbauteil (100) nach einem der voranstehenden Ansprüche,
wobei der Wärmetauscherkörper (201) einen abgeschrägten Randbereich (230) aufweist.

10. Primärbauteil (100) nach einem der voranstehenden Ansprüche,
wobei der Wärmetauscherkörper (201) ein Metall, Kunststoff oder Keramik aufweist oder hieraus besteht.

11. Primärbauteil (100) nach einem der voranstehenden Ansprüche,
wobei mindestens eine Oberfläche (202, 204) des Wärmetauscherkörpers (201) mit einer Oberfläche (102, 104) des Primärbauteils (100) thermisch gekoppelt ist.

12. Luftfahrzeug (10), aufweisend ein Primärbauteil (100) nach einem der Ansprüche 1 bis 11.

13. Luftfahrzeug (10) nach Anspruch 12,
wobei das Primärbauteil (100) ein Strukturbauteil an einem Rumpf (12), einer Tragfläche (14), einer Steuerfläche (60) oder einem Triebwerk (18) ist.
